# FASCICULE DE BREVET EUROPEEN

(11) **EP 2 317 691 B1**
(45) Date de publication et mention de la délivrance du brevet: **15.10.2014**
(21) Numéro de dépôt: 10188798.2
(22) Date de dépôt: 26.10.2010
(51) Int. Cl.: H04L 9/08, H04L 9/32

(54) **Système et procédé de sécurisation contextuelle et dynamique des échanges de données au travers d'un réseau**
Vorrichtung und Verfahren zur kontextueller und dynamischer Sicherung der Datenaustausch durch ein Netzwerk
System and method for contextually and dynamically securing data exchange through a network

(30) Priorité: 27.10.2009 FR 0905166
(43) Date de publication de la demande: 04.05.2011
(73) Titulaire: Société Française du Radiotéléphone, 75008 Paris (FR)
(72) Inventeur: Teimoorzadeh, Kourosh, 28130 Bouglainval (FR)
(74) Mandataire: Debay, Yves

(56) Documents cités:
- EP-A1- 1 858 193
- EP-A1- 2 110 774
- WO-A2-2006/030281
- Menezes, Vanstone, Oorschot: "Handbook of Applied Cryptography", 1997, CRC PRESS LLC, USA, XP002590736, * page 546 - page 554 *

## Description

La présente invention se rapporte au domaine des systèmes de sécurisation des échanges de données au sein d'un réseau et plus particulièrement au domaine des systèmes de sécurisation des échanges de données au sein d'un réseau nécessitant un niveau d'intégrité et de confidentialité sur mesure et optimale.

A l'heure actuelle, le développement des communications impose une sécurisation de plus en plus importante des transferts d'information entre différents interlocuteurs qui utilisent un réseau. Cette réalité est accrue avec la multiplication des fonctionnalités attribuées aux terminaux mobiles que sont les téléphones portables. En effet, ces terminaux, qui ont comme particularité d'être en permanence à la disposition de leur utilisateur, sont également pensés comme une interface privilégiée pour permettre des transactions financières ou tout autre type d'opération imposant une confidentialité optimisée.

Il est connu de proposer une communication sécurisée entre deux interlocuteurs grâce à l'établissement d'une relative confidentialité entre un ou plusieurs terminaux et les installations des opérateurs respectifs qui gèrent les communications de ces terminaux. Cependant, dans de tels systèmes, la relation de confiance étant opérée entre le terminal et son opérateur, les communications entre les interlocuteurs ne présentent alors plus aucune confidentialité vis-à-vis du tiers. Une intrusion étrangère au niveau de l'opérateur, par exemple de façon non limitative au niveau du média d'accès (OS mobile, PC, logiciel espion,...), ou bien au niveau du logiciel utilisé (éditeur SMS, MMS, Email,...), ou bien encore au niveau de la plate-forme de service, fait alors disparaître la sécurité qui était établie entre les interlocuteurs que sont les terminaux. Ceci est également effectif dans le cadre du développement des sécurisations des communications, notamment pour permettre une confidentialité dans le transfert de données destinées à l'établissement de transactions financières.

Le document WO 2006/030281 concerne une système et procédé de chiffrement d'échanges sécurisés des données au sein d'un réseau entre un terminal d'utilisateur d'une application et un serveur.

Le système/procédé comprend au moins un opérateur incluant l'ensemble des infrastructures connues d'un réseau de communication et intégrant un centre de gestion qui comprend au moins une première interface de communication, vers un terminal d'un utilisateur et une seconde interface de communication avec au moins un fournisseur de service ou serveur, et/ou au moins un réseau d'un serveur, qui comprend au moins une base de données intégrant un identifiant de l'utilisateur corrélé à au moins une donnée confidentielle de l'utilisateur strictement partagée par le terminal d'utilisateur et le serveur, cette sécurisation étant assurée grâce à au moins un dispositif de chiffrement qui code au moins une information transmise à partir d'une première clé, dite clé réseau permettant le chiffrèrent des flux de données partagés par trois entités : le terminal de l'utilisateur, l'opérateur et un fournisseur de service.

La présente invention a pour objet de supprimer un ou plusieurs inconvénients de l'art antérieur en proposant notamment une solution qui permet non seulement une gestion sécurisée des communications entre deux interlocuteurs utilisant le réseau d'un opérateur, mais également qui permet de garantir une intégrité et une confidentialité complète vis-à-vis de l'opérateur lors de transactions opérées entre ces interlocuteurs tout en simplifiant les processus utilisés de sorte qu'ils demeurent transparents et automatiques aux yeux des utilisateurs.

Cet objectif est atteint grâce à un système de chiffrement d'échanges sécurisés des données au sein d'un réseau entre un terminal d'utilisateur d'une application et un serveur avec lequel l'application du terminal d'utilisateur effectue une communication exclusive, confidentielle ou sécurisée, caractérisé en ce que le système comprend au moins un opérateur incluant l'ensemble des infrastructures connues d'un réseau de communication et intégrant un centre de gestion qui comprend au moins une première interface de communication, vers un terminal d'un utilisateur et une seconde interface de communication avec au moins un fournisseur de service ou serveur, et/ou au moins un réseau d'un serveur, qui comprend au moins une base de données intégrant un identifiant de l'utilisateur corrélé à au moins une donnée confidentielle de l'utilisateur strictement partagée par le terminal d'utilisateur et le serveur, cette sécurisation étant assurée grâce à au moins un dispositif de chiffrement qui code au moins une information transmise à partir d'une première clé, dite clé réseau permettant le chiffrement des flux de données partagés par trois entités : le terminal de l'utilisateur, l'opérateur et un fournisseur de service, et d'une seconde clé, dite clé service permettant le chiffrement des flux de données strictement entre le terminal et au moins une infrastructure du fournisseur de service, la clé réseau étant générée à partir des données contextuelles de la connexion du terminal à au moins une infrastructure du réseau de l'opérateur d'accès et

la clé de service étant générée d'une part à partir de la clé réseau et d'autre part à partir de données contextuelles liées au profil de l'utilisateur en relation avec au moins un service requis au niveau d'une infrastructure du fournisseur de service.

Selon une variante de réalisation, le chiffrement de la clé de service associe d'une part des données fonctionnelles liées au contexte du réseau permettant une génération dynamique de la clé de chiffrement réseau et d'autre part des données fonctionnelles liées au profil d'un utilisateur en relation avec un service donné.

Selon une autre variante de réalisation, le système d'échanges sécurisés des données au sein d'un réseau selon l'invention est caractérisé en ce que le système comprend également :
- un dispositif de génération d'au moins une clé de chiffrement dite clé de réseau, à partir d'au moins une donnée contextuelle de sorte que cette clé soit commune au terminal utilisateur, au fournisseur de service, et au centre de gestion de l'opérateur,
- un dispositif de génération d'au moins une clé de chiffrement, dite clé de service, à partir de la clé de réseau et d'au moins une donnée technique liée à un identifiant de l'utilisateur connu du serveur, et/ou d'un code dynamique strictement partagé par le terminal utilisateur et le serveur, cette clé étant strictement commune au terminal utilisateur, et au fournisseur de service

Selon une autre variante de réalisation, le système d'échanges sécurisés des données au sein d'un réseau selon l'invention est caractérisé en ce que d'une part les données contextuelles utilisées pour générer la clé de réseau comprennent au moins des données de type PDP *(Packet Data Protocol*) liées à une connexion du terminal utilisateur à une infrastructure du réseau et/ou d'accès au réseau et d'autre part les données contextuelles utilisées pour générer la clé de service comprennent au moins la clé de réseau et des données de type PDP formant un PDP_Context et liées à la spécificité de la requête d'accès de l'utilisateur à un service donné.

Selon une autre variante de réalisation, le système d'échanges sécurisés des données au sein d'un réseau selon l'invention est caractérisé en ce que le système intègre un dispositif de collecte au niveau de l'opérateur et de transfert vers au moins une infrastructure du fournisseur de service, d'une clé de réseau et/ou d'informations sur le PDP liées à la connexion de l'utilisateur.

Selon une autre variante de réalisation, le système d'échanges sécurisés des données au sein d'un réseau selon l'invention est caractérisé en ce que le système comprend un dispositif d'enregistrement d'un utilisateur au niveau d'au moins une infrastructure d'un fournisseur de service permettant la génération d'un identifiant de l'utilisateur spécifiquement associé à une ou plusieurs données confidentielles enregistrées dans une base de données du fournisseur de service .

Selon une autre variante de réalisation, le système d'échanges sécurisés des données au sein d'un réseau selon l'invention est caractérisé en ce que, le centre de gestion de l'opérateur comprenant une base de données intégrant un profil de l'utilisateur associé à une ou plusieurs données d'identification et/ou d'authentification du terminal utilisateur et/ou à une clé de réseau, le système comprend un dispositif de mise à jour du profil de l'utilisateur lors de chaque connexion et/ou de chaque communication sécurisée mise en oeuvre par l'utilisateur.

Selon une autre variante de réalisation, le système d'échanges sécurisés des données au sein d'un réseau selon l'invention est caractérisé en ce que le système comprend un dispositif de transfert sur le terminal de l'utilisateur de l'application destinée à gérer les communications sécurisées entre le terminal et au moins un fournisseur de service.

Selon une autre variante de réalisation, le système d'échanges sécurisés des données au sein d'un réseau selon l'invention est caractérisé en ce que les données contextuelles utilisées sont collectées au niveau d'au moins une infrastructure de l'opérateur pouvant être un SGSN, un GGSN, et/ou une base de données dédiée à la gestion d'authentification de l'utilisateur, et/ou de l'utilisateur pouvant être une mémoire du terminal et/ou une carte SIM.

Selon une autre variante de réalisation, le système d'échanges sécurisés des données au sein d'un réseau selon l'invention est caractérisé en ce que les données liées à l'identification et/ou l'authentification de l'utilisateur sont issues d'un ensemble comprenant notamment des identifiants IMSI *(International Mobile Subscriber Identity)* et/ou PTMSI *(Packet-Temporary Mobile Subscriber Identity*) et en ce que les données liées au contexte d'établissement de liaison sont issues d'un ensemble comprenant notamment l'APName, le NSADPI *(Network Service Access Point Identifier),* le TLLI *(Temporary Logical Link Identifier)* et/ou le TID *(Tunnel Identifier).*

Selon une autre variante de réalisation, le système d'échanges sécurisés des données au sein d'un réseau selon l'invention est caractérisé en ce que le système est appliqué à la sécurisation de communications transactionnelles.

Un autre objectif de l'invention est de proposer un procédé adapté pour la mise en oeuvre des systèmes de l'invention.

Cette solution est atteinte grâce à un procédé de sécurisation des échanges de données au sein d'un réseau mettant en jeu un système selon une des variantes selon l'invention, caractérisé en ce que le procédé comprend :
- une étape de connexion du terminal utilisateur à un opérateur avec l'établissement d'un contexte PDP associé à au moins une donnée de connexion du terminal utilisateur à une infrastructure du réseau et/ou d'accès au réseau de l'opérateur,
- une étape de transmission d'une requête de communication selon un mode sécurisé entre le terminal utilisateur et le fournisseur de service, suivi d'une validation de cette requête,
- une étape de génération d'une clé réseau par chiffrement d'au moins une donnée contextuelle de la connexion du terminal utilisateur à une infrastructure du réseau et/ou d'accès au réseau,
- une étape de génération d'une clé service par chiffrement d'au moins une clé de niveau inférieur avec une donnée technique liée à un profil de l'utilisateur connu du serveur, et/ou d'un code dynamique strictement partagé par le terminal utilisateur et le serveur,
- une étape de codage par la clé de service des échanges spécifiques entre le terminal utilisateur et le fournisseur de service.

Selon une variante de réalisation, le procédé de sécurisation des échanges de données au sein d'un réseau selon l'invention est caractérisé en ce que le procédé est renouvelé à chaque nouvelle connexion du terminal utilisateur au réseau de sorte qu'au moins une des clés utilisées par le système est régénérée.

Selon une autre variante de réalisation, le procédé de sécurisation des échanges de données au sein d'un réseau selon l'invention est caractérisé en ce que le procédé comprend au préalable une étape de transmission par le fournisseur de service, au terminal utilisateur d'un code dynamique associé à un identifiant de l'utilisateur au niveau du serveur par l'intermédiaire d'une voie de communication indépendante du réseau du système.

Selon une autre variante de réalisation, le procédé de sécurisation des échanges de données au sein d'un réseau selon l'invention est caractérisé en ce que le procédé comprend au moins une étape de mise à jour d'au moins une base de données du centre de gestion de l'opérateur corrélant le profil d'un utilisateur avec la clé de réseau générée et/ou une ou plusieurs données d'identification du terminal utilisateur.

Selon une autre variante de réalisation, le procédé de sécurisation des échanges de données au sein d'un réseau selon l'invention est caractérisé en ce que le procédé comprend au moins une étape de mise à jour d'au moins une base de données du fournisseur de service, corrélant un identifiant d'un utilisateur avec la clé de service générée et/ou une ou plusieurs données confidentielles de l'utilisateur.

L'invention, avec ses caractéristiques et avantages, ressortira plus clairement à la lecture de la description faite en référence aux dessins annexés dans lequel :

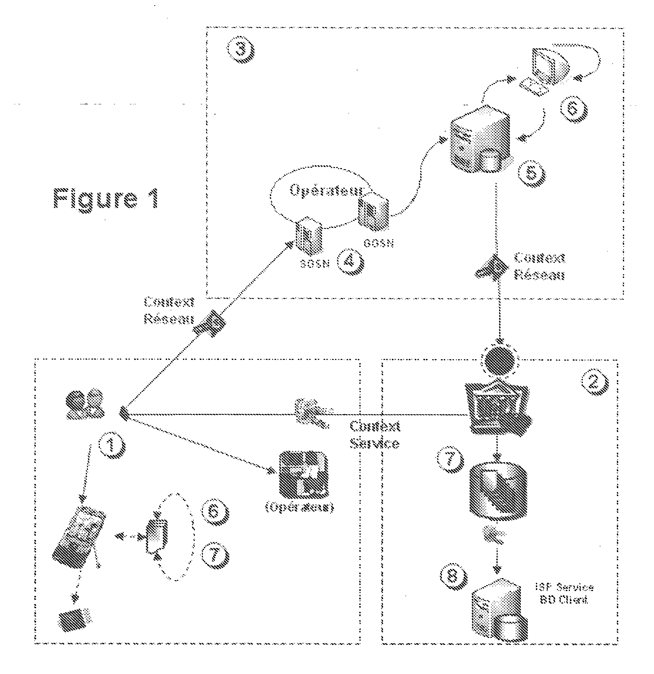

- la figure 1 représente un diagramme schématique de l'organisation du système de sécurisation selon l'invention,

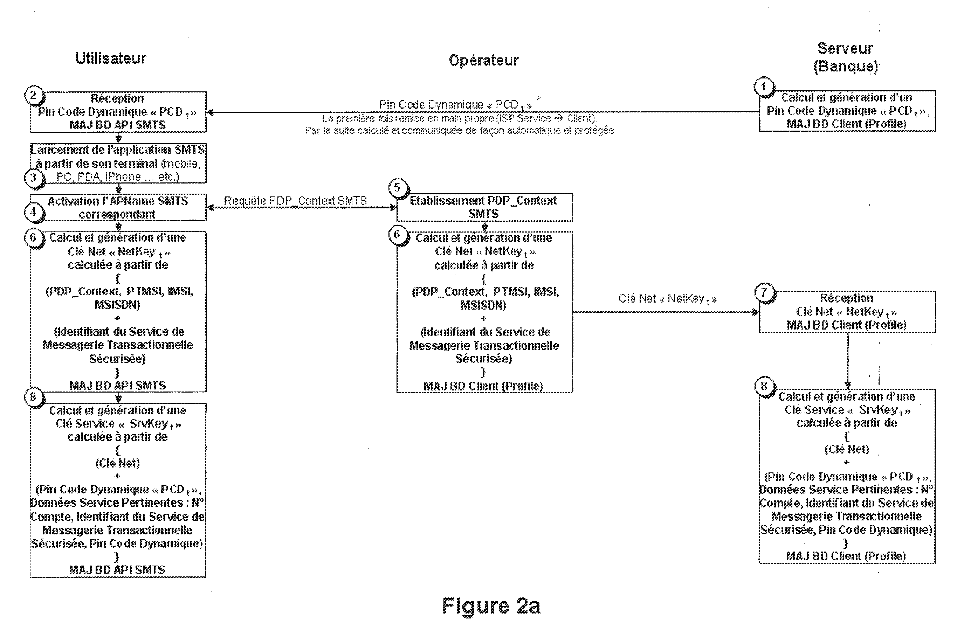

- la figure 2a représente un schéma d'un exemple de procédé de mise en place de la sécurisation selon l'invention,

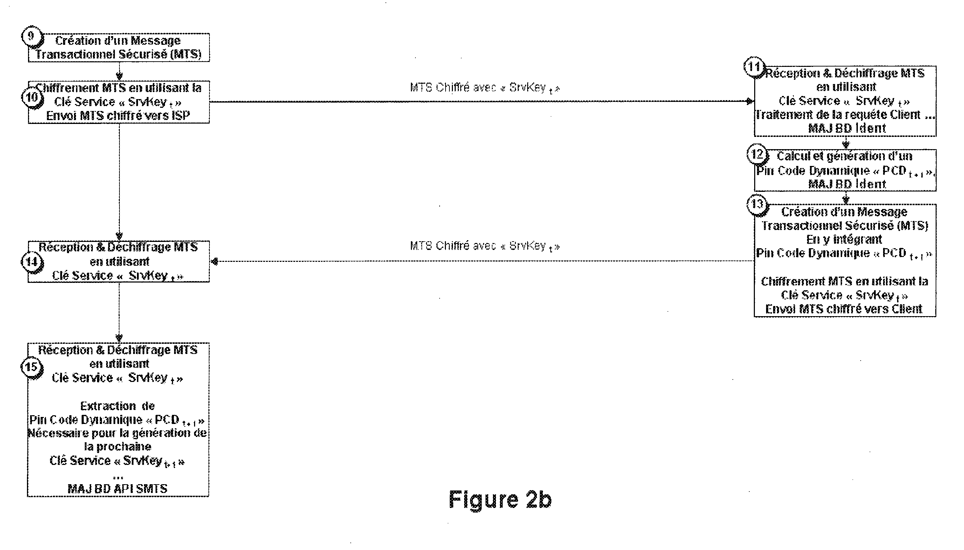

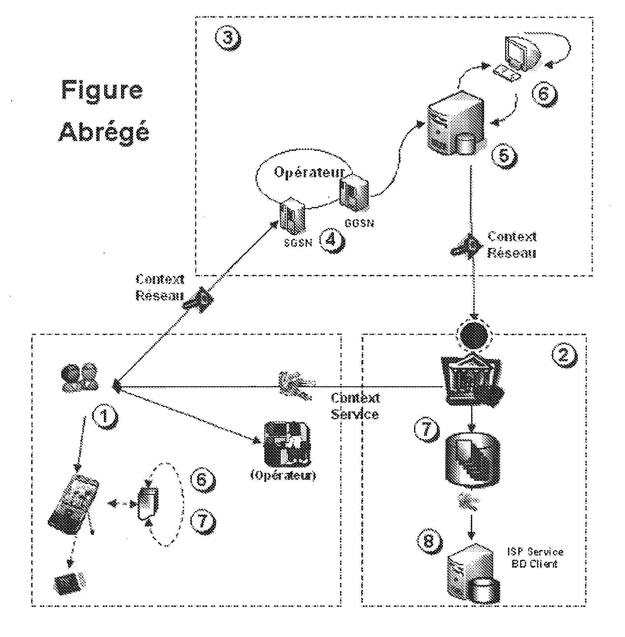

- la figure 2b représente un schéma d'un exemple de procédé de sécurisation d'une communication selon l'invention.

Il convient de faire remarquer que dans le présent document le système de l'invention, lorsqu'il est arrangé pour être géré par un opérateur de téléphonie mobile ou fournisseur d'accès à au moins une interface d'un réseau de communication, les expressions « centre de gestion » ou « équipement du centre de gestion » se rapportent à un élément de l'opérateur ou à un portail de l'opérateur. De même, il convient de noter que dans le présent document, les termes et expressions « fournisseur de service », « serveur » et « réseau de serveur » font référence à un portail de type, par exemple, ISP (*Internet Service Provider)* auprès duquel un utilisateur souhaite s'identifier et/ou s'authentifier afin d'opérer une communication confidentielle avec celui-ci et peut également faire référence à un réseau présentant un portail avec des caractéristiques similaires.

La présente invention concerne un système de communication confidentielle entre deux interlocuteurs utilisant un réseau ou une partie de réseau commune, ces deux interlocuteurs établissant cette communication sécurisée grâce à une ou plusieurs informations que ces interlocuteurs partagent préalablement à l'établissement de cette communication. Le nouveau système de chiffrement symétrique s'appuie sur les informations contextuelles et dynamiques liées à l'établissement d'une liaison exclusive entre un terminal et les infrastructures réseau d'un opérateur et/ou entre un terminal et les infrastructures d'un fournisseur de service, comme par exemple une banque ou un service d'assurances, un commerce en ligne ou un compte crédité dont les données sont destinées à demeurer confidentielles et liées à un service sur lequel des options peuvent être modifiées tel que, de façon non restrictive, un abonnement téléphonique, multimédia, assurances, etc. Par ailleurs, en reposant sur l'utilisation d'un chiffrement à partir de données contextuelles pour permettre le renforcement du niveau de sécurité, à savoir l'intégrité et la confidentialité de la communication, le système selon l'invention permet également une identification et/ou une authentification qui se trouvent rendues transparentes (c'est-à-dire : sans intervention explicite de l'utilisateur afin de renseigner des informations liées à son identifiant et/ou son authentifiant, etc.) et automatiques aux yeux de l'utilisateur.

Il convient de noter que le réseau utilisé peut être de type GSM, GPRS, UMTS ou de tout autre type susceptible d'être compatible avec le système de l'invention.

Le système selon l'invention comprend ainsi au moins un terminal (1) par lequel un utilisateur souhaite établir une communication privilégiée, sécurisée et/ou confidentielle avec un serveur (2), ou réseau de serveur, ce serveur comprenant une ou plusieurs données confidentielles auxquelles l'utilisateur souhaite accéder. Ces informations peuvent être, par exemple, des données nécessaires dans le cadre de transactions bancaires (ex. : achat, vente, consultation, «mobile-payment», etc.) et associées à un identifiant de l'utilisateur. Selon un mode de réalisation particulier, cet identifiant de l'utilisateur est spécifique du service de communication privilégié. L'accès même au portail du serveur (2), ou réseau de serveur, peut être restreint uniquement à des connexions confidentielles. Cette accession de l'utilisateur (1) aux données du serveur (2) s'effectue alors par l'intermédiaire de l'ensemble des installations et infrastructures connues d'un opérateur (3). L'opérateur (3), au niveau d'une ou de plusieurs de ses installations, est uniquement en mesure d'accéder à une partie restreinte et prédéfinie des informations échangées entre les deux interlocuteurs que sont le terminal utilisateur (1) et le serveur (2).

Un des principes de l'invention est de s'appuyer sur des données contextuelles propres au terminal utilisateur (1) pour opérer une sécurisation des échanges entre le terminal (1) et le serveur (2) au travers du réseau de l'opérateur (3). Toutefois, le terminal (1) et le serveur (2) partagent un certain nombre de données en commun avec certaines infrastructures de l'opérateur (3). Ces différentes données sont utilisées pour permettre la génération de différentes clés de chiffrement. Ces clés de chiffrement s'appuient sur des programmes d'algorithmes qui permettent l'obtention de clés privées et publiques.

Ainsi, une première clé, dite clé réseau, aussi appelée Clé Net (Net *Key),* est générée par un dispositif adapté (6), par exemple un module métier, à partir de données partagées par le terminal utilisateur (1), le serveur (2) et l'opérateur (3). Cette clé permet alors le chiffrement d'une ou de plusieurs informations partagées par ces trois éléments du système. De même, une seconde clé de chiffrement, dite clé service, *(SrvKey),* et strictement partagée par l'utilisateur et le serveur est générée par un dispositif adapté d'une part à partir de données spécifiquement partagées par le terminal utilisateur (1) et le serveur (2) et d'autre part à partir de données communes avec l'opérateur (3). Ainsi, selon un mode de réalisation préféré, la clé service est générée à partir d'au moins un code dynamique, par exemple un code PIN, et de la clé réseau, le code PIN dynamique n'étant strictement partagé que par le terminal utilisateur (1) et le fournisseur de service (2). Une fois générée, cette clé réseau de niveau supérieur permet un chiffrage et un déchiffrage de l'ensemble des données destinées à être communiquées entre les deux interlocuteurs que sont le terminal utilisateur (1) et le fournisseur de service (2), ou réseau de serveur, et assure une confidentialité dans les différents échanges qui interviennent au cours d'une communication entre le terminal utilisateur (1) et le fournisseur de service (2).

La création de la paire de clés, clé réseau et clé service, permet de former d'une part un contexte réseau géré et sécurisé par la clé réseau, de niveau de sécurité inférieur, incluant le terminal, le serveur et l'opérateur, et d'autre part un contexte service géré et sécurisé par la clé service, incluant le terminal et le serveur mais excluant l'opérateur.

Il convient de noter que les données utilisées pour générer les différentes clés sont des données contextuelles qui sont modifiées à chaque nouvelle connexion du terminal (1) à l'opérateur. De même, la clé de service comprend un chiffrement qui s'appuie sur un code dynamique destiné à être modifié régulièrement, par exemple à chaque nouvelle utilisation. Les clés de chiffrement se trouvent ainsi générées sur la base d'éléments modifiables et propres à la connexion du terminal (1) à l'opérateur (3).

Selon un mode de réalisation préféré, les données partagées qui sont utilisées pour la génération de la clé de réseau, ou Clé Net, sont des données contextuelles spécifiques de la connexion du terminal utilisateur au réseau de l'opérateur. Cette connexion s'opère ainsi au niveau d'un élément passerelle de type SGSN (*Serving GPRS Support Node*) ou GGSN *(Gateway GPRS Support Node)* (4) et entraîne la génération de données contextuelles sous la forme de PDP (*Packet Data Protocol*)*,* dites PDP Context, ces données contextuelles se trouvant associées à un nom (*APName*) propre et spécifique du terminal utilisateur connecté à l'opérateur (3).

Selon un mode de réalisation particulier, l'opérateur (3) intègre au moins une base de données (5), par exemple Radius, intégrant un profil de l'utilisateur associé à différentes données contextuelles spécifiques de connexions depuis un ou plusieurs terminaux. Ces différentes données peuvent être, par exemple et de façon non limitative, des identifiants passerelle SGSN ou GGSN ou bien encore des identifiants IMSI (*International Mobile Subscriber Identity*)*,* PTMSI (*Packet-Temporary Mobile Subscriber Identity*)*,* NSAPI (*Network Service Access Point Identifier*)*,* TLLI (*Temporary Logical Link Identifier*) ou TID (*Tunnel Identifier*)*,* susceptibles d'être associés à un nom (*APName*) propre au terminal utilisateur. L'APName est également associé à une requête d'accès à un service particulier en lien avec le fournisseur de service (3) cible avec lequel le terminal utilisateur (1) souhaite effectuer une communication confidentielle et sécurisée.

La connexion d'un terminal au réseau de l'opérateur génère, concomitamment, un PDP Context INSAPI, IMSI, TIDI associé à un service ou un APName dédié au terminal (1). Ce lancement d'un APName associé à un PDP Context sous-jacent constitue des données contextuelles spécifiques de la connexion du terminal destinées à être collectées, pour permettre une mise à jour (MAJ Profil) d'un profil utilisateur au niveau de la base de données (5) de l'opérateur.

Parallèlement à cette mise à jour (MAJ Profil), une Clé réseau de premier niveau est générée grâce à un programme dédié ou un algorithme sur la base de ces données contextuelles collectées, par un dispositif adapté (6) ou module métier. Une ou plusieurs données particulières sont ainsi utilisées pour permettre la génération de cette Clé réseau. Ces données peuvent ainsi être un PDP Context {IMSI, PTMSI, MSISDN} et partagées au moins par l'opérateur (3) et le terminal utilisateur (1). Cette clé de premier niveau est alors intégrée à une base de données Radius (5) qui permet une corrélation de cette Clé réseau avec le profil utilisateur correspondant.

La Clé réseau de premier niveau est alors transmise au fournisseur de service (2), ou réseau de serveur, qui la récupère pour l'enregistrer (MAJ1 I BD Ident) dans une base de données et l'intègre au niveau d'un dispositif adapté (7), aussi appelé module métier serveur, associé à un programme dédié ou algorithme pour permettre la génération d'une clé service de second niveau de sécurité. La génération de cette clé service est opérée par une encapsulation qui associe plusieurs facteurs confidentiels prédéfinis. Selon un mode de réalisation particulier, cette encapsulation s'appuie sur une association à la fois de la clé réseau, d'un code PIN dynamique et d'une ou de plusieurs informations contextuelles, dynamiques et pertinentes, liées au profil de l'utilisateur et relatives au service du fournisseur auquel la clé est associée. Les facteurs utilisés lors de l'encapsulation ne sont strictement connus que du terminal utilisateur (1) et du fournisseur de service (2), ou serveur. Ces informations pertinentes peuvent être, par exemple et de façon non limitative, un code dynamique, un numéro de compte particulier, un identifiant de messagerie transactionnelle, des données bancaires, ou bien encore une valeur particulière. Selon un mode de réalisation particulier de l'invention, ces données correspondent à des données contextuelles qui se rapportent au service particulier demandé au niveau du fournisseur de service (2), ou réseau de serveur. Cette clé service, de second niveau de sécurité, se trouve alors enregistrée (MAJ2 BD Ident) dans une base de données (8) qui corrèle notamment un profil identifiant de l'utilisateur avec une ou plusieurs données confidentielles.

Au niveau du terminal utilisateur (1), ce terminal (1) est en mesure de générer la même clé réseau de niveau inférieur, que celle générée par le dispositif adapté (7) de l'opérateur (3). Le terminal (1) et l'opérateur disposant et recrutant les mêmes données et utilisant un même programme dédié ou algorithme prédéfini pour permettre la génération de cette clé réseau. Cette clé réseau est générée à partir de requêtes de la connexion de terminal au réseau. Cette connexion est basée sur le lancement, explicite ou implicite par l'utilisateur, d'un APName dédié. L'utilisateur, via son terminal (1), et son APName peut alors être reconnu comme étant autorisé à accéder à un fournisseur de service (2) particulier via l'opérateur (3) et grâce à sa Clé réseau. Selon un mode de réalisation particulier, cette Clé réseau peut alors être automatiquement reconnue lorsque l'utilisateur se connecte à partir de son terminal (1) au réseau via l'opérateur (3).

La génération de la Clé Service de niveau de sécurité supérieur est effectuée parallèlement au fournisseur de service (2), au niveau du terminal (1) utilisateur. Le dispositif adapté à la génération d'une clé au niveau du terminal (1) s'appuie également sur la Clé réseau de niveau inférieur ainsi que sur la ou les données pertinentes utilisées au niveau du fournisseur de service (2). Le choix de ces données pertinentes est prédéfini avant la connexion du terminal (1) au réseau via l'opérateur (3). Ainsi, pour éviter que le choix de ces données pertinentes ne puisse être connu au niveau du réseau de l'opérateur, ces données, connues et enregistrées (MAJ BD Srv) au niveau d'une base de données du fournisseur de service (2), sont fournies au terminal utilisateur (1) par une voie de communication différente de celle du réseau de l'opérateur. Par exemple, ces données confidentielles sont transmises par courrier électronique, par voie postale ou en main propre directement à l'utilisateur qui les rentre (MAJ BD API) alors lui-même dans une mémoire de son terminal (1).

La clé service de niveau supérieur, une fois générée, permet un chiffrement de l'ensemble des données destinées à être communiquées entre un terminal utilisateur (1) et le fournisseur de service (2), ou réseau de serveur, tout en garantissant une confidentialité vis-à-vis d'un tiers et notamment vis-à-vis de l'opérateur (3).

L'initialisation d'un tel service de communications confidentielles sécurisées au niveau d'un fournisseur de service, peut être effectuée par l'inscription de l'utilisateur à un service de messagerie sécurisée, par exemple le Service de Messagerie Transactionnelle Sécurisée (SMTS) avec une étape d'enregistrement de l'identifiant utilisateur dans une base de données du serveur (8). Cet enregistrement génère alors concomitamment la création d'au moins un numéro de compte et d'un code PIN dynamique destinés à être partagés avec l'utilisateur.

Selon un mode de réalisation particulier, le terminal utilisateur (1) opère au niveau du système de l'invention par l'intermédiaire d'une application particulière, dite SMTS en référence au Service de Messagerie Transactionnelle Sécurisée, enregistrée dans une mémoire, par exemple une carte SIM. Cette application SMTS est arrangée pour que, une fois lancée, celle-ci soit en mesure, à partir du terminal (1), d'initialiser l'environnement SMTS du fournisseur de service (2), serveur ou réseau de serveurs, cible afin notamment de gérer l'environnement du service de messagerie transactionnelle mais également le chiffrement des communications destinées à demeurer confidentielles. Ce chiffrement permet ainsi la connexion du terminal (1) au fournisseur de service (2) via l'opérateur (3) en gérant la récupération d'une ou de plusieurs données pertinentes et indispensables à la génération des différentes clés de chiffrement. Selon un exemple de réalisation, lorsqu'un utilisateur s'inscrit auprès du portail d'un opérateur ou d'un fournisseur de service pour être en mesure d'effectuer des communications sécurisées selon le système de l'invention, l'application SMTS est téléchargée par le terminal, ou bien si celle-ci est déjà présente sur le terminal, l'application peut être débloquée par téléchargement d'un élément d'activation.

La communication sécurisée entre un terminal utilisateur (1) et le fournisseur de service (2) cible est opéré de sorte que le code dynamique est modifié lors de chaque nouvel échange entre le fournisseur de service (2) et le terminable utilisateur (1). Selon un mode de réalisation préféré, la modification du code dynamique est opérée au niveau du fournisseur de service (2). Ainsi le serveur recevant un message sécurisé (MTS) émis par le terminal utilisateur et crypté ou chiffré avec la clé service d'échange n°t (SrvKey ₜ), le serveur déchiffre le message reçu avec la même clé service, puis, le code étant dynamique, un nouveau code (PCD ₜ₊₁) est calculé et généré pour permettre la génération d'une nouvelle clé service pour l'échange n°t+1 (SrvKey ₜ₊₁). Ce nouveau code (PCD ₜ₊₁) est alors transmis au terminal (1) sous la forme d'un message chiffré grâce à la clé service d'échange n°t (SrvKey ₜ). Le terminal (1) reçoit alors le message chiffré, qu'il décrypte avec la clé service d'échange n°t (SrvKey ₜ) pour récupérer le nouveau code dynamique (PCD ₜ₊₁). Ce nouveau code dynamique (PCD t+₁) est alors partagé par le terminal (1) et le fournisseur de service (2) qui l'a généré et va permettre également au niveau du terminal la génération d'une nouvelle clé service pour le prochain échange n°t+1 (SrvKey ₜ₊₁) entre le terminal (1) et le fournisseur de service (2).

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration mais peuvent être modifiés dans le domaine défini par la portée des revendications jointes.

## Revendications

1. Système de chiffrement d'échanges sécurisés des données au sein d'un réseau entre un terminal d'utilisateur d'une application et un serveur avec lequel l'application du terminal d'utilisateur effectue une communication exclusive, confidentielle ou sécurisée, **caractérisé en ce que** le système comprend au moins un opérateur incluant l'ensemble des infrastructures connues d'un réseau de communication et intégrant un centre de gestion qui comprend au moins une première interface de communication, vers un terminal d'un utilisateur et une seconde interface de communication avec au moins un fournisseur de service ou serveur, et/ou au moins un réseau d'un serveur, qui comprend au moins une base de données intégrant un identifiant de l'utilisateur corrélé à au moins une donnée confidentielle de l'utilisateur strictement partagée par le terminal d'utilisateur et le serveur, cette sécurisation étant assurée grâce à au moins un dispositif de chiffrement qui code au moins une information transmise à partir d'une première clé, dite clé réseau permettant le chiffrement des flux de données partagés par trois entités : le terminal de l'utilisateur, l'opérateur et un fournisseur de service, et d'une seconde clé, dite clé service permettant le chiffrement des flux de données strictement entre le terminal et au moins une infrastructure du fournisseur de service, la clé réseau étant générée à partir des données contextuelles de la connexion du terminal à au moins une infrastructure du réseau de l'opérateur d'accès et la clé service étant générée d'une part à partir de la clé réseau et d'autre part à partir de données contextuelles liées au profil de l'utilisateur en relation avec au moins un service requis au niveau d'une infrastructure du fournisseur de service.

2. Système d'échanges sécurisés des données au sein d'un réseau selon la revendication 1, **caractérisé en ce que** le chiffrement de la clé service associe d'une part des données fonctionnelles liées au contexte du réseau permettant une génération dynamique de la clé de chiffrement réseau et d'autre part des données fonctionnelles liées au profil d'un utilisateur en relation avec un service donné.

3. Système de sécurisation des échanges de données au sein d'un réseau selon une des revendications précédentes, **caractérisé en ce que** le système comprend également :
- un dispositif de génération d'au moins une clé de chiffrement dite clé réseau, à partir d'au moins une donnée contextuelle de sorte que cette clé soit commune au terminal utilisateur, au fournisseur de service, et au centre de gestion de l'opérateur,
- un dispositif de génération d'au moins une clé de chiffrement, dite clé service, à partir de la clé réseau et d'au moins une donnée technique liée à un identifiant de l'utilisateur connu du serveur, et/ou d'un code dynamique strictement partagé par le terminal utilisateur et le serveur, cette clé étant strictement commune au terminal utilisateur et au fournisseur de service.

4. Système d'échanges sécurisés des données au sein d'un réseau selon une des revendications précédentes, **caractérisé en ce que** d'une part les données contextuelles utilisées pour générer la clé réseau comprennent au moins des données de type PDP ou *Packet Data Protocol* liées à une connexion du terminal utilisateur à une infrastructure du réseau et/ou d'accès au réseau et d'autre part les données contextuelles utilisées pour générer la clé service comprennent au moins la clé réseau et des données de type PDP formant un PDP_Context et liées à la spécificité de la requête d'accès de l'utilisateur à un service donné.

5. Système d'échanges sécurisés des données au sein d'un réseau selon une des revendications précédentes, **caractérisé en ce que** le système intègre un dispositif de collecte au niveau de l'opérateur et de transfert vers au moins une infrastructure du fournisseur de service, d'une clé réseau et/ou d'informations sur le PDP liées à la connexion de l'utilisateur.

6. Système d'échanges sécurisés des données au sein d'un réseau selon une des revendications précédentes, **caractérisé en ce que** le système comprend un dispositif d'enregistrement d'un utilisateur au niveau d'au moins une infrastructure d'un fournisseur de service permettant la génération d'un identifiant de l'utilisateur spécifiquement associé à une ou plusieurs données confidentielles enregistrées dans une base de données du fournisseur de service.

7. Système d'échanges sécurisés des données au sein d'un réseau selon une des revendications précédentes, **caractérisé en ce que**, le centre de gestion de l'opérateur comprenant une base de données intégrant un profil de l'utilisateur associé à une ou plusieurs données d'identification et/ou d'authentification du terminal utilisateur et/ou à une clé réseau, le système comprend un dispositif de mise à jour du profil de l'utilisateur lors de chaque connexion et/ou de chaque communication sécurisée mise en oeuvre par l'utilisateur.

8. Système d'échanges sécurisés des données au sein d'un réseau selon une des revendications précédentes, **caractérisé en ce que** le système comprend un dispositif de transfert sur le terminal de l'utilisateur de l'application destinée à gérer les communications sécurisées entre le terminal et au moins un fournisseur de service.

9. Système d'échanges sécurisés des données au sein d'un réseau selon une des revendications précédentes, **caractérisé en ce que** les données contextuelles utilisées sont collectées au niveau d'au moins une infrastructure de l'opérateur pouvant être un SGSN, un GGSN, et/ou une base de donnée dédiée à la gestion d'authentification de l'utilisateur, et/ou de l'utilisateur pouvant être une mémoire du terminal et/ou une carte SIM afin de bénéficier des mécanismes d'identification et d'authentification fortes offertes par la technologie UICC ou *Universal Integrated Circuit Card.*

10. Système d'échanges sécurisés des données au sein d'un réseau selon une des revendications précédentes, **caractérisé en ce que** les données liées à l'identification et/ou l'authentification de l'utilisateur sont issues d'un ensembte comprenant notamment des identifiants IMSI (*International Mobile Subscriber Identity*) et/ou PTMSI ou *Packet-Temporary Mobile Subscriber Identy* et **en ce que** les données liées au contexte d'établissement de liaison sont issues d'un ensemble comprenant notamment l'APName, le NSADPI ou *Network Service Access Point Identifier*, le TLLI ou *Temporary Logical Link Identifier* et/ou le TID ou *Tunnel Identifier*.

11. Procédé de sécurisation des échanges de données au sein d'un réseau mettant en jeu un système selon au moins une des revendications 1 à 10, **caractérisé en ce que** le procédé comprend :
- une étape de connexion du terminal utilisateur à un opérateur avec l'établissement d'un contexte PDP associé à au moins une donnée de connexion du terminal utilisateur à une infrastructure du réseau et/ou d'accès au réseau de l'opérateur,
- une étape de transmission d'une requête de communication selon un mode sécurisé entre le terminal utilisateur et le fournisseur de service, suivi d'une validation de cette requête,
- une étape de génération d'une clé réseau par chiffrement d'au moins une donnée contextuelle de la connexion du terminal utilisateur à une infrastructure du réseau et/ou d'accès au réseau,
- une étape de génération d'une clé service par chiffrement d'au moins une clé réseau avec une donnée technique liée à un profil de l'utilisateur connu du serveur, et/ou d'un code dynamique strictement partagé par le terminal utilisateur et le serveur,
- une étape de codage par la clé service des échanges spécifiques entre le terminal utilisateur et le fournisseur de service.

12. Procédé de sécurisation des échanges de données au sein d'un réseau selon la revendication 11, **caractérisé en ce que** le procédé est renouvelé à chaque nouvelle connexion du terminal utilisateur au réseau de sorte qu'au moins une des clés utilisées par le système est régénérée.

13. Procédé de sécurisation des échanges de données au sein d'un réseau selon une des revendications précédentes, **caractérisé en ce que** le procédé comprend au préalable une étape de transmission par le fournisseur de service, au terminal utilisateur d'un code dynamique associé à un identifiant de l'utilisateur au niveau du serveur par l'intermédiaire d'une voie de communication indépendante du réseau du système.

14. Procédé de sécurisation des échanges de données au sein d'un réseau selon une des revendications précédentes, **caractérisé en ce que** le procédé comprend au moins une étape de mise à jour d'au moins une base de données du centre de gestion de l'opérateur corrélant le profil d'un utilisateur avec la clé réseau générée et/ou une ou plusieurs données d'identification du terminal utilisateur.

15. Procédé de sécurisation des échanges de données au sein d'un réseau selon une des revendications précédentes, **caractérisé en ce que** le procédé comprend au moins une étape de mise à jour d'au moins une base de données du fournisseur de service, corrélant un identifiant d'un utilisateur avec la clé service générée et/ou une ou plusieurs données confidentielles de l'utilisateur.

## Patentansprüche

1. Verschlüsselungssystem für gesicherte Datenaustausche innerhalb eines Netzwerks zwischen einem Endgerät eines Benutzers einer Anwendung und einem Server, mit dem die Anwendung des Endgeräts des Benutzers eine exklusive, vertrauliche oder gesicherte Kommunikation durchführt, dadurch charakterisiert, dass das System mindestens einen Betreiber aufweist, der die bekannten Infrastrukturen eines Kommunikationsnetzwerks einbezieht und ein Verwaltungszentrum einbezieht, das mindestens eine erste Kommunikationsschnittstelle zu einem Endgerät eines Benutzers und eine zweite Kommunikationsschnittstelle mit mindestens einem Dienstanbieter oder Server und/oder mindestens einem Servernetzwerk aufweist, und das mindestens eine Datenbank aufweist, die eine Identifikation des Benutzers einbezieht, die mit mindestens einem vertraulichen Datum des Benutzers, das strikt zwischen dem Benutzer und dem Server geteilt ist, korreliert ist, wobei die Sicherung mittels mindestens einer Verschlüsselungsvorrichtung gewährleistet ist, die mindestens eine übertragene Information ausgehend von einem ersten Schlüssel, genannt Netzwerkschlüssel, der die Verschlüsselung des von drei Entitäten - dem Endgerät des Benutzers, dem Betreiber und einem Dienstanbieter - geteilten Datenflusses, ermöglicht, und einem zweiten Schlüssel, genannt Dienstschlüssel, der die Verschlüsselung von Datenflüssen strikt zwischen dem Endgerät und mindestens einer Infrastruktur des Dienstanbieters ermöglicht, kodiert, wobei der Netzwerkschlüssel ausgehend von Kontextdaten der Verbindung des Endgeräts mit mindestens einer Infrastruktur des Netzwerks des Betreibers für den Zugang erzeugt wird und der Dienstschlüssel zum einen ausgehend von dem Netzwerkschlüssel und zum anderen ausgehend von Kontextdaten erzeugt wird, die mit dem Profil des Benutzers in Bezug auf mindestens einem auf Ebene einer Infrastruktur des Dienstanbieters angeförderten Dienst verknüpft sind.

2. System für gesicherte Datenaustausche innerhalb eines Netzwerks gemäß Anspruch 1, dadurch charakterisiert, dass die Verschlüsselung des Dienstschlüssels zum einen funktionelle Daten, die mit dem Kontext des Netzwerks verknüpft sind und eine dynamische Erzeugung des Netzwerkverschlüsselungsschlüssels ermöglichen, und zum anderen funktionelle Daten im Zusammenhang mit einem gegebenen Dienst, die mit dem Profil eines Benutzers verknüpft sind, zuordnet.

3. System für die Sicherung von Datenaustauschen innerhalb eines Netzwerks gemäß einem der vorhergehenden Ansprüche, dadurch charakterisiert, dass das System gleichermaßen aufweist:
- eine Vorrichtung zum Erzeugen mindestens eines Verschlüsselungsschlüssels, genannte Netzwerkschlüssel, ausgehend von mindestens einem Kontextdatum von der Art, dass der Schlüssel dem Benutzerendgerät, dem Dienstanbieter und dem Verwaltungszentrum des Betreibers gemeinsam ist,
- eine Vorrichtung zum Erzeugen mindestens eines Verschlüsselungsschlüssels, genannt Dienstschlüssel, ausgehend von dem Netzwerkschlüssel und mindestens einem technischen Datum, das mit einer Identifikation des Benutzers, die dem Server bekannt ist, verknüpft ist, und/oder einem dynamischen Code, der strikt zwischen dem Benutzerendgerät und dem Server geteilt wird, wobei der Schlüssel strikt dem Benutzerendgerät und den Dienstanbieter gemeinsam ist.

4. System für gesicherte Datenaustausch innerhalb eines Netzwerks gemäß einem der vorhergehenden Ansprüche, dadurch charakterisiert, dass einerseits die zum Erzeugen des Netzwerkschlüssels verwendeten Kontextdaten mindestens Daten vom Typ PDP oder Packet Data Protocol, die mit einer Verbindung des Benutzerendgeräts zu einer Infrastruktur des Netzwerks und/oder zum Zugriff auf das Netzwerk verknüpft sind, aufweisen und andrerseits die zum Erzeugen des Dienstschlüssels verwendeten Kontextdaten mindestens den Netzwerkschlüssel und Daten vom Typ PDP aufweisen, die einen PDP_Context bilden und mit dem Spezifikum der Zugriffsanfrage des Benutzers auf den gegebenen Dienst verknüpft sind.

5. System für gesicherte Datenaustausche innerhalb eines Netzwerks gemäß einem der vorhergehenden Ansprüche, dadurch charakterisiert, dass das System eine Vorrichtung zur Sammlung auf Ebene des Betreibers und zum Transfer eines Netzwerksschlüssels und/oder von Informationen über den PDP, die mit der Verbindung des Benutzers verknüpft sind, an mindestens eine Infrastruktur des Dienstanbieters einbezieht.

6. System für gesicherte Datenaustausch innerhalb eines Netzwerks gemäß einem der vorhergehenden Ansprüche, dadurch charakterisiert, dass das System eine Vorrichtung zum Registrieren eines Benutzers auf Ebene mindestens einer Infrastruktur eines Dienstanbieters aufweist, die die Erzeugung einer Identifikation des Benutzers ermöglicht, die spezifisch ein oder mehreren vertraulichen Daten zugeordnet ist, die in einer Datenbank des Dienstanbieters gespeichert sind.

7. System für gesicherte Datenaustausch innerhalb eines Netzwerks gemäß einem der vorhergehenden Ansprüche, dadurch charakterisiert, dass das Verwaltungszentrum des Betreibers eine Datenbank aufweist, die ein Profil des Benutzers einbezieht, das ein oder mehreren Daten zur Identifikation und/oder Authentifizierung des Benutzerendgeräts und/oder einem Netzwerkschlüssel zugeordnet ist, wobei das System eine Vorrichtung zum Aktualisieren den Benutzerprofils anlässlich jeder Verbindung und/oder jeder vom Benutzer durchgeführte gesicherten Kommunikation aufweist.

8. System für gesicherte Datenaustausche innerhalb eines Netzwerks gemäß einem der vorhergehenden Ansprüche, dadurch charakterisiert, dass das System eine Vorrichtung zum Transferieren der Anwendung, die zum Verwalten der gesicherten Kommunikationen zwischen dem Endgerät und mindestens einem Dienstanbieter vorgesehen ist, auf das Benutzerendgerät aufweist.

9. System für gesicherte Datenaustausch innerhalb eines Netzwerks gemäß einem der vorhergehenden Ansprüche, dadurch charakterisiert, dass die verwendeten Kontextdaten auf Ebene mindestens einer Infrastruktur des Betreibers, die ein SGSN, ein GGSN und/oder eine Datenbank sein kann, die für die Verwaltung der Authentifizierung des Benutzers vorgesehen ist, und/oder mindestens einer Infrastruktur des Benutzers, die ein Speicher des Endgeräts und/oder eine SIM-Karte zum Nutzen von starken Mechanismen zur Identifikation und Authentifizierung, die durch die Technologie UICC oder Universal Integrated Circuit Card geboten werden, sein kann, gesammelt werden.

10. System für gesicherte Datenaustausche innerhalb eines Netzwerks gemäß einem der vorhergehenden Ansprüche, dadurch charakterisiert, dass die Daten, die mit der Identifikation und/oder Authentifizierung des Benutzers verknüpft sind, aus einer Menge hervorgegangen sind, die insbesondere IMSI (International Mobile Subscriber Identity)-Identifikationen und/oder PTMSI oder Packet Temporary Mobile Subscriber Identity - Identifikationen aufweist, und dadurch, dass die Daten, die mit dem Context des Aufbaus der Verbindung aus einer Menge hervorgehen, die insbesondere den APName, den NSADPI oder Network Service Access Point Identifier, den TLLI oder Temporary Logical Link Identifier und/oder den TID oder Tunnel Identifier aufweist.

11. Verfahren zum Sichern von Datenaustauschen innerhalb eines Netzwerks, das ein System gemäß mindestens einem der Ansprüche 1 bis 10 einsetzt, dadurch charakterisiert, dass das Verfahren aufweist:
- einen Schritt des verbindens des Benutzerendgeräts mit einem Betreiber mit dem Ausbau eines PDP-Kontexts, der mindestens einem Datum der Verbindung des Benutzerendgeräts mit einer Infrastruktur des Netzwerks und/oder zum Zugriff auf das Netzwerk des Betreibers, zugeordnet ist,
- einen Schritt des Übertragens einer Anfrage nach einer Kommunikation gemäß einem gesicherten Modus zwischen dem Benutzerendgerät und dem Dienstanbieter, gefolgt von einer Validierung dieser Anfrage,
- einen Schritt des Erzeugens eines Netzwerkschlüssels mittels Verschlüsseins mindestens eines Kontextdatums der Verbindung des Benutzerendgeräts mit einer Infrastruktur des Netzwerks und/oder für den Zugriff auf das Netzwerk,
- einen Schritt des Erzeugens eines Dienstschlüssels durch Verschlüssen mindestens eines Netzwerkschlüssels mit einem Technikdatum, das mit einem dem Server bekannten Profil des Benutzers verknüpft ist und/oder eines dynamischen Codes, der strikt zwischen dem Benutzerendgerät und dem Server geteilt wird,
- einen Schritt des Kodierens der Austausche, die spezifisch zwischen dem Benutzerendgerät und dem Dienstanbieter sind, mittels des Dienstschlüssels.

12. Verfahren zum Sichern von Datenaustauschen innerhalb eines Netzwerks gemäß Anspruch 11, dadurch charakterisiert, dass das Verfahren bei jeder neuen Verbindung des Benutzerendgeräts auf die Art erneuert wird, dass mindestens einer der von dem System verwendeten Schlüssel erneuert wird.

13. Verfahren zum Sichern von Datenaustauschen innerhalb eines Netzwerks gemäß einem der vorhergehenden Ansprüche, dadurch charakterisiert, dass das Vorfahren vorab einen Schritt des Übertragens eines dynamischen Codes, der einer Identifikation des Benutzers zugeordnet ist, mittels des Dienstanbieters an den Benutzer des Endgerät auf Ebene des Servers mittels eines von dem Netzwerk unabhängigen Kommunikationspfads aufweist.

14. Verfahren zum Sichern von Datenaustauschen innerhalb eines Netzwerks gemäß einem der vorhergehenden Ansprüche, dadurch charakterisiert, dass das Verfahren mindestens einen Schritt zum Aktualisieren von mindestens einer Datenbank des Verwaltungszentrums des Betreibers aufweist, die das Profil eines Benutzers mit einem erzeugten Netzwerkschlüssel und/oder ein oder mehreren Daten zur Identifikation des Benutzers des Endgerätes korreliert.

15. Verfahren zum Sichern von Datenaustauschen innerhalb eines Netzwerks gemäß einem der vorhergehenden Ansprüche, dadurch charakterisiert, dass das Verfahren mindestens einen Schritt des Aktualisieren mindestens einer Datenbank des Dienstanbieters aufweist, die eine Identifikation des Benutzers mit einem erzeugten Dienstschlüssel und/oder ein oder mehreren vertraulichen Daten des Benutzers korreliert.

## Claims

1. Encryption system for secure exchanges of the data within a network between a user terminal for an application and a server with which the application of the user terminal effects exclusive, confidential or secure communication, **characterised in that** the system comprises at least one operator including all of the known infrastructures of a communications network and incorporating a management centre which comprises at least one first interface for communication with a terminal of a user and a second interface for communication with at least one service provider or server, and/or at least one network of a server which comprises at least one database incorporating an identifier for the user correlated to at least one confidential item of data of the user strictly shared by the user terminal and the server, this security being assured thanks to at least one encryption device which encodes at least one item of information transmitted from a first key, called a network key, allowing the encryption of the streams of data shared by three entities the terminal of the user, the operator and a service provider, and from a second key, called a service key, allowing the encryption of the streams of data strictly between the terminal and at least one infrastructure of the service provider, the network key being generated from the contextual data of the connection of the terminal to at least one infrastructure of the network of the operator for access and the service key being generated firstly from the network key and secondly from contextual data linked to the profile of the user in relation with at least one service required from an infrastructure of the service provider.

2. System for secure exchanges of the data within a network according to claim 1, **characterised in that** the encryption of the service key associates on the one hand functional data linked to the context of the network allowing dynamic generation of the network encryption key and on the other hand functional data linked to the profile of a user in relation with a given service.

3. System for securing the exchanges of data within a network according to one of the preceding claims, **characterised in that** the system also comprises:
- a device for generating at least one encryption key called a network key, from at least one item of contextual data such that this key is common to the user terminal, the service provider and the management centre of the operator,
- a device for generating at least one encryption key called a service key, from the network key and at least one item of technical data linked to an identifier of the user known by the server, and/or a dynamic code strictly shared by the user terminal and the server, this key being strictly common to the user terminal and the service provider.

4. System for secure exchanges of the data within a network according to one of the preceding claims, **characterised in that** on the one hand the contextual data used to generate the network key comprise at least data of PDP or *Packet Data* Protocol type linked to a connection of the user terminal to an infrastructure of the network and/or for access to the network and can the other hand the contextual data used to generate the service key comprise at least the network key and data of PDP type forming a PDP_Context and linked to the specifics of the request by the user for access to a given service.

5. System for secure exchanges of the data within a network according to one of the preceding claims, **characterised in that** the system incorporates a device for collecting from the operator and for transferring to at least one infrastructure of the service provider a network key and/or information on the PDP linked to the connection of the user.

6. System for secure exchanges of the data within a network according to one of the preceding claims, **characterised in that** the system comprises a device for registering a user in at least one infrastructure of a service provider allowing the generation of an identifier of the user specifically associated with one or more items of confidential data registered in a database of the service provider.

7. System for secure exchanges of the data within a network according to one of the preceding claims, **characterised in that**, the management centre of the operator comprising a database incorporating a profile of the user linked to one or more items of data for identification and/or authentication of the user terminal and/or to a network key, the system comprises a device for updating the profile of the user at the time of every connection and/or every secure communication implemented by the user.

8. System for secure exchanges of the data within a network according to one of the preceding claims, **characterised in that** the system comprises a device for transferring to the terminal of the user the application intended to manage the secure communications between the terminal and at least one service provider.

9. System for secure exchanges of the data within a network according to one of the receding claims, **characterised in that** the contextual data used are collected from at least one infrastructure of the operator which can be an SGSN, a GGSN, and/or a database dedicated to managing the authentication of the user, and/or from the user which can be a memory of the terminal and/or a SIM card in order to benefit from the strong identification and authentication mechanisms offered by the UICC or Universal Integrated Circuit Card technology.

10. System for secure exchanges of the data within a network according to one of the preceding claims, **characterised in that** the data linked to the identification and/or authentication of the user are derived from a set comprising notably IMSI or International Mobile Subscriber Identity and/or PTMSI or *Packet Temporary Mobile Subscriber Identify* identifiers and **in that** the data linked to the context for establishing the connection are derived from a set comprising notably the APName, the NSADPI or *Network Service Access Point Identifier,* the TLLI or *Temporary Logical Link Identifier* and/or the TID or *Tunnel Identifier.*

11. Method for securing the exchanges of data within a network implementing a system according to at least one of claims 1 to 10, **characterised in that** the method comprises:
- a steep for connection of the user terminal to an operator establishing a PUP context linked to at least one item of data for connection of the user terminal to an infrastructure of the network and/or for access to the network of the operator,
- a steep for transmission of a request for communication according to a secure mode between the user terminal and the service provider, hollowed by validation of this request,
- a step for generation of a network key by encryption of at least one item of contextual data for the connection of the user terminal to an infrastructure of the network and/or for access to the network,
- step for generation of a service key by encryption of at least one network key with one item of technical data linked to a profile of the user known by the server, and/or a dynamic code strictly shared by the user terminal and the server,
- a step for encoding by the service key of the specific exchanges between the user terminal and the service provider.

12. Method for securing the exchanges of data within a network according to claim 11, **characterised in that** the method is renewed at every new connection of the user terminal to the network such that at least one of the keys used by the system is regenerated.

13. Method for securing the exchanges of data within a network according to one of the preceding claims, **characterised in that** the method firstly comprises a steep for transmission by the service provider to the user terminal of a dynamic code associated with an identifier of the user for the server through the intermediary of a communications path independent of the system network.

14. Method for securing the exchanges of data within a network according to one of the preceding claims, **characterised in that** the method comprises at least one step for updating at least one database of the management centre of the operator correlating the profile of a user with the network key generated and/or one or more items of data for identification of the user terminal.

15. Method for securing the exchanges of data within a network according to one of the preceding claims, **characterised in that** the method comprises at least one step for updating at least one database of the service provides, correlating an identifier of a user with the service key generated and/or one or more items of confidential data of the user.
